# EUROPEAN PATENT APPLICATION

(11) **EP 2 144 469 A2**
(43) Date of publication of application: **13.01.2010**
(21) Application number: 09380134.8
(22) Date of filing: 10.07.2009
(51) Int. Cl.: H04W 60/04

(54) **Mobile terminal localization method and system in telecommunications cellular networks**

(30) Priority: 11.07.2008 ES 200802073
(71) Applicant: Vodafone Group PLC, Newbury Berkshire RG14 2FN (GB); Vodafone España, S.A.U., 28108 Alcobendas, Madrid (ES)
(72) Inventor: Almodovar Herraiz, Daniel, 28020 - Madrid (ES); Montaner Gutierrez, Francisco Javier, 28020 - Madrid (ES); Rodriguez Reyes, José Manuel, 28020 - Madrid (ES)
(74) Representative: Carvajal y Urquijo, Isabel

(57) **Abstract**

Terminal localization system and method in telecommunications cellular networks, said networks comprising a plurality of localization areas (LA) which in turn comprise a plurality of cells (C), wherein, at least, one of them is an objective cell (Co); wherein said system and method are based on the localization in a tracking or gross search, when the terminal is outside the localization area (LA) where the objective cell (Co) is not located, and a tracking or fine search, at cell (C) level where the terminal is inside the localization area (LA) where the objective cell (Co) is located.

## Description

### Object of the invention

The object of the present invention refers to a user terminal localization method and system in telecommunications cellular networks, in such a way that it is possible to send alarms and/or track the position of a user when his/her mobile terminal enters a specific geographical area.

### Background of the invention

In localization systems for "area triggering", there are defined, for each user, certain geographical areas or "objective areas", which are those for which it is desired to send an alarm when the user is in them (for example associated to advertising services or tourist information). A user can have in his/her service profile several predefined objective areas. If these systems are based on cell identifiers (*CeLLId*), objective areas are defined as the set of one or more identifiers (*CeLLIds*). It is also possible to define an objective area as the area inside which it is desired to follow the position of a user, for example, follow the user only when s/he is inside the province of Toledo.

In current cellular systems, the network is not necessarily informed of the cell changes to which a mobile terminal is connected. If it is desired to locate a user using the cell to which his/her mobile terminal is connected, it is required that the terminal reports each cell change to a localization server. Therefore, in area triggering systems based on CeLLIds, both typical solutions in the current state of the art consist of:
(i) Sending the range of cell identifiers (*CeLLIds*) of the objective areas to the user terminal (either to the SIM, or to the terminal itself), the terminal being in charge of making the decision of when it is necessary to send an alarm message to the server.
(ii) The terminal indicates each cell change to the server, and it is the sever that decides when the cell change implies an area triggering or not.

In the first case, the problem lies in the fact that the server needs to configure the range of cells (*CeLLIds*) in the terminal. Since the number of cells inside a specific geographical area changes according to the network planning, the server needs to be sure of the topology changes of said network, and, therefore, update the data of said topology in the terminals.

In the second case, the terminal is continuously sending messages of cell changes, without taking into account if the terminal is inside or next to an objective cell or not. Thus, for example, if the localization area is Valencia and the user is in Madrid, it makes no sense to expend radio and network resources for the terminal to indicate each one of the cell changes while the user is in Madrid. These messages have to be forcefully rejected by the localization server since they are not useful for the required localization.

The application PCT WO2007007125 presents a method based on the different geographical resolution of localization areas and cells to minimize the use of batteries in mobile terminals. The present invention uses the support of a server to offer alarm and user tracking services with resolution at cell level which is not possible with the solution proposed in PCT WO2007007125.

The American patent with the application number US2006099960 (EP1638351) describes a method to process the localization area changes of a mobile terminal based on sending the range of cell identifiers (*CeLLIds*) of the objective areas to the user terminal.

### Description of the invention

The present invention proposes a solution based on the use of Location Area Codes (LAC) to reduce the traffic of messages when the user is outside the localization area containing objective areas.

A location area (LAC) is an integral part of any mobile communications system and comprises a plurality of cells (normally between 80 and 300). These localization areas are generally immutable and correspond to a specific geographical area, for example, a postal code of Valencia. The number of cells and cell identifiers (*CeLLIds*) associated to said localization area changes, unlike the localization area identifier (LACld, LAI). Said identifier is part of the Cell Global Identifier or CGI.

The present invention proposes the optimization of the method described where the terminal indicates each cell change to the server, and it is the server that decides when the cell change will imply an "area triggering" or not, using two resolution types depending on the user localization. In this way, when the user is outside a localization area (LAC) containing predefined objective areas, the terminal will only report to the server messages indicating localization area changes, that is to say, a "gross" resolution is defined at area level and not at cell level. The server knows that the user is outside the localization area where the objective is located and is interested in the user only when s/he enters said area. The server is only responsible for checking in the area change if said area is indeed objective or not. If it is objective, then the server request the user terminal to send each cell change (each CeLLId change), that is to say, unlike what was described before, a "fine" resolution is defined of the user terminal localization, at cell level and not as geographical area level. Finally, when the user terminal finds the objective cell(s), the server will activate the processes associated to said event, for example, sending commercial messages or other kind of messages. When the terminal leaves the localization area where the objective is found, it will report it again to the server, which will activate the "gross" resolution mode again.

An option of the present invention can also consist of the server configuring inside the mobile terminal a range of localization areas in such a way that the telephone itself manages the changes between the fine resolution and the gross resolution, since the logic of the telephone will be responsible, according to its list of localization areas, of managing said area changes.

Another plausible option is that the detection of localization area changes be given by the network itself instead of from the messages sent by the terminal.

Thanks to the invention thus described it is attained; first, the localization of a mobile terminal inside a specific area such as that of a cell, allowing multiple possibilities and functionalities (for example, people tracking).

On the other hand, at a more technical level, the number of messages coming from the mobile terminal to the server is reduced since only messages indicating area changes are sent, and not messages indicating cell change during great part of the time.

Besides, the complexity of having the network topology configured in the terminal is completely avoided.

The detection of cell or localization area changes can be implemented in an application in the mobile terminal or in an intelligent card inserted in the terminal (such as SIM, UICC).

### Brief description of the drawings

The following is a brief description of a series of drawings which will help understand the invention better clearly relating to an embodiment of said invention which is presented as a non-limiting example thereof.

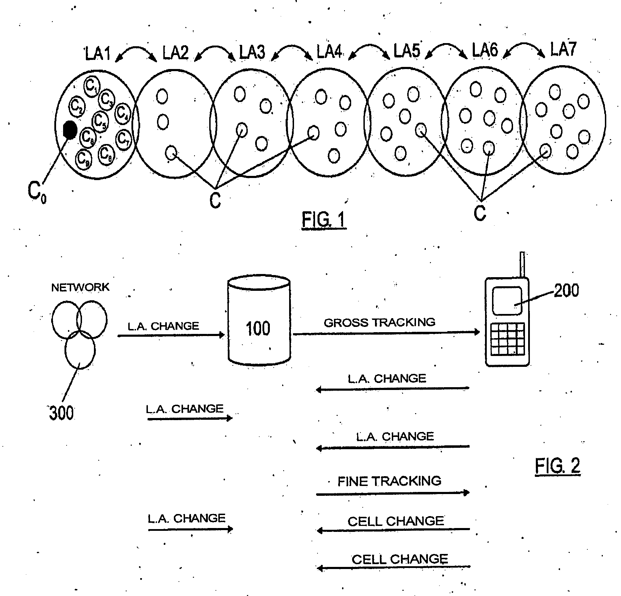

Figure 1 schematically shows the changes between the different localization areas and the shift from "gross" resolution to "fine" resolution.

Figure 2 shows a diagram representing the method and system object of the present invention patent.

### Preferred embodiment of the invention

As it can be seen in the attached drawings, the terminal localization system in telecommunications cellular networks, object of the present invention, comprises a plurality of localization areas (LA) which in turn comprise a plurality of cells (C), wherein, at least, one of them is an objective cell (Co). The system is formed by, at least:
A localization server (100) comprising means to interpret localization area (LA) changes configured to detect that said change implies that the new localization area comprises the objective cell, said means being also configured to send a message to the user terminal (200) activating the means to detect a cell (C) change; and where it also comprises means to determine the objective cell (Co).
A user terminal (200) comprising means to detect a localization area (LA) change, configured to detect said change and send a message indicating the change to the localization server (100); and where it also comprises means to detect cell (C) changes configured to detect said change and send a message indicating the change to the localization server (100).

It is an option of the present invention that the user terminal (200) also comprises means to interpret a localization area change, including a list thereof. Said means are configured to determine if a specific localization area comprises the objective cell, sending a message to the server (100).

In a second aspect of the present invention, the terminal localization method in telecommunications cellular networks comprises at least the following stages:
(i) A first stage of detection of localization area (LA) changes, defining if said new stage comprises the objective cell, leading in this case to the second stage. At this point, there exist several embodiment options, such as the following:
   (a) The terminal (200) indicates each localization area (LA) change to the server (100), in such a way that the server determines to go on to the second stage if the new area comprises the objective cell (Co).
   (b) The terminal (200) comprises a list of localization areas (LA), including those comprising the objective cell, in such a way that it is the internal logic of the terminal itself that determines to go on to the second stage if the new area comprises the objective cell (Co).
   (c) The detection of the localization area (LA) change is given by the network (300) itself.
   Each one of these options represents a greater optimization of the network (300) resources.
(ii) A second stage of detection of cell (C) changes, where the user terminal (200) sends the server (100) a message for each cell (C) change, that is to say, "fine" resolution; and
(iii) A third stage in which the server (100) determines the objective cell (Co).

## Claims

1. Terminal localization system in telecommunications cellular networks, said networks comprising a plurality of localization areas (LA) which in turn comprise a plurality of cells (C), wherein, at least, one of them is an objective cell, wherein said system comprises at least a localization server (100) and a user terminal (200), **characterized in that**
the user terminal (200) comprises means to detect a localization area (LA) change, configured to detect said change and send a message indicating the change to the localization server (100); and where it also comprises means to detect cell (C) changes, configured to detect said change and send a message indicating the change to the localization server (100); **and in that**
the localization server (100) comprises means to interpret localization area (LA) changes, configured to detect that said change implies that the new localization area comprises the objective cell (Co), said means being also configured to send a message to the user terminal (200) activating the means to detect a cell (C) change; and where it also comprises means to determine the objective cell.

2. System according to claim 1 **characterized in that** the user terminal (200) also comprises means to interpret a localization area change, including a list thereof, and said means being configured to determine if a specific localization area (LA) comprises the objective cell, sending a message to the server (100).

3. Terminal localization method in telecommunications cellular networks, said networks comprising a plurality of localization areas (LA) which, in turn comprise a plurality of cells (C), wherein, at least one of them is an objective cell (Co) **characterized in that** it comprises at least the following stages:
(i) A first stage of detection of localization area (LA) changes, defining if said new stage comprises the objective cell (Co), leading in this case to the second stage;
(ii) A second stage of detection of cell (C) changes, where the user terminal (200) sends the server (100) a message for each cell (C) change; and
(iii) A third state in which the server (100) determines the objective cell (Co).

4. Method according to claim 3, **characterized in that** the terminal (200) indicates each localization area change to the server (100), in such a way that the server (100) determines to go on to the second stage if the new area comprises the objective cell (Co).

5. Method according to claim 3, **characterized in that** the terminal (200) comprises a list of localization areas (LA), including those comprising the objective cell (Co), in such a way that it is the internal logic of the terminal itself that determines to go on to the second stage if the new area comprises the objective cell (Co).

6. Method according to claim 3, **characterized in that** the detection of the localization area (LA) change is given by the network (300) itself.
